# NEUE EUROPÄISCHE PATENTSCHRIFT

(11) **EP 2 649 246 B2**
(45) Veröffentlichungstag und Bekanntmachung des Hinweises auf die Entscheidung über den Einspruch: **04.11.2020**
(45) Hinweis auf die Patenterteilung: 02.08.2017
(21) Anmeldenummer: 11794003.1
(22) Anmeldetag: 05.12.2011
(51) Int. Cl.: E03C 1/05, G05D 23/13, E03B 1/04

(54) **SANITÄRSYSTEM MIT EINER MISCHZENTRALE**
SANITARY SYSTEM WITH A CENTRAL MIXING FACILITY
SYSTÈME SANITAIRE ÉQUIPÉ D'UNE CENTRALE DE MÉLANGE

(30) Priorität: 06.12.2010 CH 20432010
(43) Veröffentlichungstag der Anmeldung: 16.10.2013
(60) Teilanmeldung: 17183910.3
(73) Patentinhaber: LoccoZ SYSTEM AG, 5707 Seengen (CH)
(72) Erfinder: Zoccolillo, Giuseppe, 5707 Seengen (CH)
(74) Vertreter: Keller Schneider Patent- und Markenanwälte AG (Bern)
(86) Internationale Anmeldenummer: PCT/CH2011/000291
(87) Internationale Veröffentlichungsnummer: WO 2012/075592

(56) Entgegenhaltungen:
- EP-A1- 0 471 244
- EP-A2- 0 195 271
- EP-A2- 1 240 564
- EP-A2- 1 640 837
- EP-A2- 2 184 413
- EP-A2- 2 306 099
- WO-A1-85/03764
- WO-A1-99/34065
- WO-A1-03/023155
- WO-A1-2010/031882
- WO-A2-03/107527
- WO-A2-2009/131399
- CH-B1- 698 596
- DE-A1- 10 035 803
- DE-A1- 19 539 879
- DE-C1- 10 119 690
- DE-U1- 8 128 904
- DE-U1-202007 004 831
- DE-U1-202011 105 696
- FR-A1- 2 340 424
- FR-A1- 2 494 806
- FR-A1- 2 891 169
- FR-A1- 2 934 038
- GB-A- 2 424 367
- US-A- 2 991 481
- US-A- 4 563 780
- US-A- 4 753 265
- US-A- 5 504 950
- US-A- 6 006 748
- US-A- 6 098 213
- US-A1- 2007 246 550
- US-A1- 2008 141 455
- US-A1- 2009 301 576
- US-A1- 2010 280 679
- US-B1- 6 317 717
- US-B2- 6 895 985
- US-B2- 7 520 445

## Beschreibung

### Technisches Gebiet

Die Erfindung betrifft ein Sanitärsystem mit einer Mischzentrale nach dem Oberbegriff von Anspruch 1, wie es aus der Druckschrift WO85/03764 bekannt ist.

### Stand der Technik

Sanitäre Systeme in Häusern und Wohnungen stellen Brauchwasser insbesondere für Waschbecken, Badewannen, Duschen, WCs, Waschmaschinen, Küchenspüle oder Geschirrspüler zur Verfügung. Wo erforderlich, werden eine Warmwasserleitung und eine Kaltwasserleitung zum Verbraucher verlegt und beim Verbraucher Mischvorrichtungen installiert, um Brauchwasser einer bestimmten Temperatur und einer bestimmten Durchflussgeschwindigkeit zu beziehen, also insbesondere bei Waschbecken, Badewannen, Duschen und Küchenspülen. Falls nur eine Kaltwasserversorgung erforderlich ist, also insbesondere bei WCs, Waschmaschinen oder Geschirrspüler, wird nur eine Kaltwasserleitung zum Verbraucher verlegt.

Die CH 698 596 zeigt eine sanitäre Hausinstallation mit einem Verteilblock, der einen Kaltwasserstrang sowie einen Warmwasserstrang enthält und an eine Kaltwasserleitung sowie an eine Warmwasserleitung angeschlossen ist. Eine Vielzahl Dosiereinrichtungen sind am Verteilblock ankoppelbar und enthalten Stellmittel für den Durchfluss. Pro Dosiereinrichtung führt eine einzelne Leitung zu einer Entnahmestelle mit einem Bedienorgan, von welchem über einen Informationskanal Bedienungshandlungen an ein Steuergerät zur Generierung von Stellinformationen für die Stellmittel übermittelt werden.

Die EP 0 195 271 zeigt eine Sanitäreinrichtung, um in einem Badezimmer mehrere Wascheinrichtungen mit heissem und kaltem Wasser zu versorgen. Eine Zentrale umfasst einen Kalt- und Warmwasseranschluss und mehrere Auslässe zur Versorgung der Wascheinrichtungen mit Wasser. Temperatur und Menge werden für jeden Auslass durch ein Mischventil eingestellt. Eine thermoskopische Einheit hält die Temperatur im Wesentlichen auf dem vorgegebenen Wert. Ein Temperatursensor ist mit einer Steuereinheit verbunden. Einstellvorrichtungen und eine Hauptsteuerung sind mit der Zentrale verbunden. Die Zentrale kann für jede einzelne an der Steuerung angehängte Armatur einen Durchfluss- oder Druckregler für die individuelle Regelung aufweisen. Alle Funktionen (Volumen, Temperatur, Fluss) werden durch die zentrale Steuereinheit kontrolliert, wobei der Benutzer aber nach wie vor Temperatur und Ein/Aus-Zustand verändern kann. Durch den programmgesteuerten automatisierten Betrieb des Steuersystems können gewisse Sicherheitsaspekte berücksichtigt werden.

Die DE 101 19 690 betrifft eine Sanitärinstallation in einem Bad. Das Bad weist mehrere, räumlich auseinander liegende Sanitäreinrichtungen wie eine Badewanne, eine Dusche, ein Handwaschbecken, ein Bidet und dergleichen auf. Eine zentrale Mischarmatur weist eingangsseitige Anschlüsse für Kalt- und Warmwasser und mehrere Mischwasserauslässe auf. Die Mischwasserauslässe sind mit jeweils einem Wasserzulauf einer Sanitäreinrichtung verbunden. Die Sanitäreinrichtung umfasst eine Temperaturmesseinrichtung und eine Durchflussmesseinrichtung. Eine elektronische Steuerung steuert und überwacht alle Mischwasserströme. Es können Vorgabewerte für die Mischwassertemperatur oder Durchflussmenge eingegeben und abgespeichert werden. Ein Ein-/Ausgabegerät umfasst Tasten sowie ein Display und kann dezentral an Sanitäreinrichtungen angeordnet sein.

Die WO 03/107527 zeigt eine Sanitärinstallation zur Versorgung von Wohneinheiten mit Kalt- und Warmwasser. Eine zentrale Verteilerarmatur weist einen Kalt- und Warmwasseranschluss sowie einen Mischwasserablaufanschluss auf. Eine Einrohrleitung ist durch die gesamte Wohneinheit geführt und weist Zapfstellen auf. Die Zapfstelle weist ein Fernbedienteil auf.

Gebräuchliche sanitäre Systeme benötigen einen hohen Installationsaufwand. Bestehende Installationen lassen sich nur aufwendig an unterschiedliche Bedürfnisse oder Vorgaben anpassen.

### Darstellung der Erfindung

Aufgabe der Erfindung ist es, ein dem eingangs genannten technischen Gebiet zugehörendes sanitäres System zu schaffen, welches einen geringen Installationsaufwand erfordert und flexible Anpassungen an unterschiedliche Anforderungen ermöglicht.

Die Lösung der Aufgabe ist durch die Merkmale des Anspruchs 1 definiert. Gemäss der Erfindung ist eine den Verbraucher betreffende Verbraucheridentifikation an die Steuerzentrale übertragbar, welche die Steuerzentrale zur Steuerung der steuerbaren Mischeinheit berücksichtigt.

Die Übertragung der Verbraucheridentifikation erfolgt über irgendeinen Kommunikationskanal, d. h. über ein Kommunikationskabel wie eine Signalleitung, über ein Bussystem, über eine drahtlose Kommunikationsverbindung wie z. B. ein WiFi-Netzwerk oder über irgendeinen anderen Kommunikationskanal. Beim Verbraucher ist ein elektronischer Speicher vorgesehen zur Abspeicherung der Verbraucheridentifikation, also z. B. ein Mikroprozessor mit einem digitalen Speicher, sowie ein Kommunikationsmodul wie beispielsweise ein serielles Interface. Die Steuerzentrale weist ein entsprechendes Kommunikationsmodul auf, das mit dem beim Verbraucher angebrachten Kommunikationsmodul verbunden ist, also z. B. über ein serielles Kommunikationskabel. Nach der Einstellung eines Parameterwerts an der Bedieneinrichtung wird dieser an die Steuerzentrale übertragen, welche sogleich über die erwähnten Kommunikationsmittel eine Abfrage betreffend die Verbraucheridentifikation durchführt. Eine Verbraucheridentifikation kann auch z. B. an der Bedieneinrichtung eingegeben und über eine Kommunikationsverbindung von der Bedieneinrichtung an die Steuerzentrale übertragen oder übermittelt werden. Eine Verbraucheridentifikation kann ferner auch direkt bei der Steuerzentrale eingegeben werden, beispielsweise über eine Tastatur, welche an die Steuerzentrale bei Inbetriebnahme des Sanitärsystems angeschlossen wird, um eine Konfiguration des Systems durchzuführen.

In einem Datenspeicher der Steuerzentrale ist eine Liste von möglichen bzw. zulässigen Verbrauchern abgespeichert Mit Hilfe der übermittelten Verbraucheridentifikation kann die Steuerzentrale die Ventile bzw. Mischer steuern, die zur Fluidleitung gehören, an welcher der Verbraucher angeschlossen ist.

Es sind ferner Mittel vorgesehen, um die Verbraucheridentifikation mit einer Mischleitung zu verknüpfen. Bei einer kabelgebundenen oder bussystemgebundenen Übertragung der Verbraucheridentifikation ergibt sich die Identifikation der Mischleitung durch die Identifikation des betreffenden Kabels oder des betreffenden Busteilnehmers. Bei einer funkbasierten Übertragung der Verbraucheridentifikation kann an der Mischleitung verbraucherseitig eine Identifikation angebracht sein, welche zusammen mit der Verbraucheridentifikation übertragen wird. Die an der Mischleitung verbraucherseitig angebrachte Identifikation kann visuell oder elektronisch erfassbar sein, also z. B. aus einem Nummernschild oder einem elektronischen Speichermittel wie einem RFID-Chip bestehen.

Durch die Berücksichtigung der Verbraucheridentifikation zur Steuerung der steuerbaren Mischeinheit wird insbesondere gewährleistet, dass beim Verbraucher kein Schaden angerichtet wird. Die Steuerzentrale ist beispielsweise eingerichtet, dass aus der Verbraucheridentifikation der Verbrauchertyp ermittelbar ist, also dass feststellbar ist, ob es sich um eine Dusche, ein Waschbecken, eine Badewanne oder ein WC handelt. Bei einer Dusche kann die maximale Temperatur des Wassers begrenzbar sein, um Verbrühungen des Benutzers zu vermeiden. Bei einem Waschbecken kann der Wasserdruck begrenzbar sein, um ein Verspritzen von Wasser, welches mit zu hohem Druck auf das Waschbecken trifft, zu verhindern.

Die Mischzentrale weist ausgangseitig mehrere Mischleitungen auf und ist eingerichtet, um beispielsweise alle sanitären Einrichtungen eines Badezimmers oder einer Küche mit Wasser zu versorgen. So kann eine Mischleitung für das Waschbecken, eine Mischleitung für die Dusche, eine Mischleitung für die Badewanne und eine Mischleitung für das WC vorgesehen sein. Die Mischzentrale kann direkt in einem Zimmer, also z. B. im Badezimmer, angeordnet sein. Es ist aber auch möglich, die Mischzentrale z. B. im Keller oder einem anderen Nebenraum anzubringen.

Eine Mischeinheit kann einen Temperaturmischer und einen Mengenregler aufweisen. Der Temperaturmischer ist eingangsseitig mit der Warmwasserleitung und der Kaltwasserleitung verbunden und stellt ausgangsseitig ein bestimmtes Mischverhältnis zwischen Warmwasser und Kaltwasser zur Verfügung. Mit dem Mengenregler wird anschliessend die Wassermenge eingestellt, welche an die Mischleitung abgegeben wird. Die Mischeinheit kann aber auch Dosiereinrichtungen für das Warmwasser und das Kaltwasser aufweisen, wobei eine dosierte Warmwassermenge und Kaltwassermenge zusammengeführt und an die Mischleitung abgegeben wird (wie z. B. in der CH 698 596 beschrieben).

Verbraucher betreffen sanitäre Einrichtungen mit oder ohne einer Armatur, also beispielsweise Waschbecken, Spültröge, Badewannen, Duschen oder WCs, Geschirrspüler, Waschmaschinen.

Die Verbraucheridentifikation kann regelmässig, zu bestimmten Zeitpunkten oder aufgrund bestimmter Ereignisse an die Steuerzentrale übermittelt werden. So kann beispielsweise bei einer Geschirrspülmaschine oder bei einer Waschmaschine die Verbraucheridentifikation regelmässig abgefragt werden, um die aktuell notwendigen Brauchwassereinstellungen betreffend Temperatur oder Druck einzustellen. Dabei ist die Verbraucheridentifikation nicht gleichzusetzen mit einem Steuerbefehl, welcher der Steuerzentrale z. B. angibt, welche Menge an Wasser, welcher Druck, welche Temperatur etc. zu einem bestimmten Zeitpunkt an den Verbraucher abzugeben ist. Die Verbraucheridentifikation kann auch im Rahmen eines Waschprogramms zusammen mit den Verbraucherbefehlen (welche Temperatur, Menge, Druck etc. spezifizieren) an die Steuerzentrale übermittelt werden, um erforderliche Einstellungen des Brauchwassers anzufordern. Statt einer regelmässigen Abfrage der Verbraucheridentifikation können Parameter betreffend notwendige Brauchwassereinstellungen separat übermittelt oder abgefragt werden.

Da zwischen der Mischzentrale und dem Verbraucher nur eine einzelne Mischwasserleitung installiert werden muss, wird der Installationsaufwand grundsätzlich verkleinert. Aus der Verbraucheridentifikation lassen sich für den Verbraucher angepasste Betriebswerte automatisch und ohne zusätzliche Installationen einstellen. Dadurch wird der Installationsaufwand bei der Erstinstallation und auch der Unterhaltsaufwand bei einem Wechsel von Verbrauchern vereinfacht.

Vorzugsweise sind Sensoren vorgesehen zur Bestimmung von Messwerten wie insbesondere der Temperatur, des Drucks und/oder der Durchflussmenge, welche die Steuerzentrale zur Steuerung und/oder Regelung der steuerbaren Mischeinheit berücksichtigt. Die Sensoren sind beispielsweise ausgangsseitig an den Mischleitungen angeordnet. Sensoren können auch eingangsseitig an der Warmwasserleitung und/oder an der Kaltwasserleitung angeordnet sein. Die Steuerzentrale kann eingerichtet sein, um die steuerbare Mischeinheit entweder nur zu steuern, d. h. ein bestimmtes Mischverhältnis und einen bestimmte Durchflussmenge oder einen Druck einzustellen. Die Steuerzentrale kann aber auch eingerichtet sein, die Messwerte der Sensoren zu berücksichtigen, um bei einer Abweichung der Temperatur oder des Drucks die steuerbare Mischeinheit entsprechend zu regeln. Die von den Sensoren ermittelten Messwerte können an die Bedieneinrichtung übertragen werden, um diese dem Benutzer anzuzeigen.

In einer bevorzugten Ausführungsform weist der Verbraucher eine aufsteckbare Armatur mit einer an die Steuerzentrale übertragbaren Verbraucheridentifikation auf. Die aufsteckbare Armatur stellt beim Aufstecken zugleich eine Wasserverbindung als auch elektrische Verbindungen her, also eine elektrische Signalverbindung und/oder eine Verbindung zur elektrischen Energieübertragung. Eine solche Verbindung ist z. B. aus der US 6,006,784 bekannt. Insbesondere kann die aufsteckbare Armatur so ausgeführt sein, wie in der gleichzeitig mit der vorliegenden Anmeldung eingereichten Anmeldung "Armatursockel und aufsteckbare Armatur" des gleichen Anmelders beschrieben. Die Armatur kann beispielsweise eingerichtet sein, dass zunächst die Wasserverbindung erstellt wird und erst anschliessend elektrische Verbindungen. Dadurch kann gewährleistet werden, dass eine Wasserabgabe erst bei erstellter Wasserverbindung erfolgt. Die Steuerzentrale und/oder die Armatur können eingerichtet sein, dass die Verbraucheridentifikation an die Steuerzentrale übertragen wird, sobald die elektrische Verbindung bei der Armatur erstellt ist.

Alternativ wird bei einem Verbraucher ohne aufsteckbare Armatur, also z. B. bei einem WC, einer Spülmaschine oder einer Waschmaschine die Verbraucheridentifikation beispielsweise direkt, d. h. über eine an die Steuerzentrale angeschlossene Tastatur oder über eine Schnittstelle zu einem portablen Computer bei der Steuerzentrale eingegeben. Vorzugsweise ist eine Verbraucheridentifikation mit der Bedieneinrichtung generierbar und an die Steuerzentrale übertragbar. Dies ist insbesondere von Vorteil bei Verbrauchern ohne abgespeicherte Verbraucheridentifikation, wie dies beispielsweise bei einem WC der Fall sein kann. Die Eingabe der Verbraucheridentifikation kann über irgendwelche an der Bedieneinrichtung vorgesehenen Eingabemittel erfolgen, also beispielsweise über eine Tastatur, einen Touchscreen, eine Leseeinrichtung wie einen optischen Scanner, ein RFID-Lesegerät, oder irgendwelche andere Eingabemittel.

Bevorzugt sind zur Signal- und/oder Energieübertragung kabelbasierte, bussystembasierte und/oder funkbasierte Verbindungen vorgesehen. Kabelbasierte oder bussystembasierte Verbindungen erfordern einen zusätzlichen Installationsaufwand, ermöglichen aber eine Energieübertragung und können eine hohe Betriebssicherheit bieten. Demgegenüber erfordern funkbasierte Verbindungen wie z. B. in einem WiFi-Drahtlosfunknetzwerk einen kleineren Installationsaufwand. Zur Bereitstellung von elektrischer Energie sind jedoch Batterien erforderlich oder zusätzliche Kabelverbindungen. Eine funkbasierte Verbindung ist tendenziell störanfälliger als eine kabelbasierte Lösung. Eine kabelbasierte Verbindung wird auch als drahtgebundene Verbindung bezeichnet.

Vorzugsweise berücksichtigt die Steuerzentrale aufgrund einer Auswertung einer Verbraucheridentifikation einen Maximal- und/oder Minimalwert, beispielsweise eine maximale Wassertemperatur, eine maximale Wassermenge und/oder einen minimalen Wasserdruck. Dadurch lassen sich insbesondere Verbrühungen bei Benutzern wegen zu heissem Wasser, ein Verspritzen von Wasser wegen zu hohem Wasserdruck, ein Überlaufen einer Badewanne wegen einer zu grossen Wassermenge oder irgendwelche andere Schäden verhindern. Die Auswertung der Verbraucheridentifikation kann sich beispielsweise auf eine Tabellen- und/oder Datenbankabfrage beziehen.

Die Steuerzentrale weist eine Tabelle auf zur Zuordnung von Verbraucheridentifikationen zu zulässigen Betriebswerten eines Verbrauchers. Aufgrund der Tabelle lässt sich eine Zuordnung schnell und effizient durchführen. Die Tabelle kann für denselben Verbrauchertyp verschiedene Einträge aufweisen, so dass beispielsweise für eine aufsteckbare Armatur mit einem Auslass, der vom Waschbecken weit entfernt ist, ein anderer Betriebswert wie beispielsweise ein Wasserdruck einstellbar ist als für eine aufsteckbare Armatur mit einem Auslass, der sehr nahe am Waschbecken ist.

Alternativ sind die Betriebswerte in der Verbraucheridentifikation enthalten, d. h. digital codiert oder als elektronische Datensequenz. Dies erfordert einen höheren Aufwand betreffend die Speichermittel bei der Armatur und die Kommunikationsmittel zur Übertragung der Verbraucheridentifikation.

Die Mischzentrale weist mehrere Mischeinheiten auf, vorzugsweise zwischen drei und acht Mischeinheiten, welche in modularer Bauweise anordenbar sind. Mit einer solchen Mischzentrale können typische sanitäre Installationseinheiten wie ein Badezimmer, eine Küche, ein WC vollständig mit Brauchwasser versorgt werden. Es kann ein Modul vorgesehen sein zum Anschluss an die Warm- und Kaltwasserleitung, an welchem eine gewünschte Anzahl identischer Module mit je einer Mischeinheit angeschlossen werden können, d. h. ein erstes Modul erstellt die Verbindung zur Warm-und Kaltwasserleitung und daran werden quasi in serieller Weise ein zweites, drittes usw. Modul mit je einer Mischeinheit angeschlossen.

Bevorzugt weist eine Mischeinheit einen Temperaturmischer zur Erstellung eines Mischverhältnisses von Warm- und Kaltwasser sowie einen daran angeschlossenen Mengenregler auf. Die Erstellung der Temperatur des Brauchwassers und die Einstellung des Drucks, der Menge oder Fliessgeschwindigkeit erfolgt durch zwei auf die jeweilige Aufgabe optimierte Vorrichtungen und ist dementsprechend präzise und einfach steuerbar. Alternativ weist die Mischeinheit je eine Dosiereinrichtung für das Warm- und das Kaltwasser auf. Die Einstellung von Wassertemperatur und/oder -druck kann sich dadurch jedoch komplizierter gestalten.

Vorzugsweise ist anschliessend an eine Mischeinheit ein Temperatursensor, ein Drucksensor und/oder ein Durchflusssensor vorgesehen. Die Messwerte der Sensoren werden an die Steuerzentrale übermittelt und es wird dadurch eine sehr präzise Regelung von Parametern wie Wassertemperatur oder -druck ermöglicht.

In einer bevorzugten Ausführungsform ist ein Druckreduzierventil für die Warmwasserleitung und/oder ein Druckreduzierventil für die Kaltwasserleitung vorgesehen. Je nach Auslastung der Mischzentrale kann somit ein entsprechender Warm-und/oder Kaltwasserdruck zur Verfügung gestellt werden. So kann ein kurzzeitig erhöhter Druckbedarf, wie bei einer WC-Spülung oder bei der Reinigung einer Dusche, befriedigt werden. Falls die Mischzentrale sehr viele Mischleitungen aufweist, welche gleichzeitig benutzt werden, kann der entsprechende Wasserbedarf durch ein Öffnen der Druckreduzierventile bereitgestellt werden.

Bevorzugt ist für die Warmwasserleitung und/oder für die Kaltwasserleitung ein Temperatursensor, ein Drucksensor und/oder ein Durchflusssensor vorgesehen. Die Messwerte dieser Sensoren können an die Steuerzentrale übermittelt werden und für die Einstellung der Mischeinheiten berücksichtigt werden. Falls beispielsweise das zugeführte Warmwasser an Temperatur verliert, kann die Mischeinheit schnell und präzis nachgeregelt werden.

In Ergänzung der obigen Erfindung kann ein Sanitärsystem vorgesehen sein, welches eine Rückgewinnung zum Rückgewinnen von Wasser und/oder Wärmeenergie umfasst. Die Rückgewinnung wird im Wesentlichen mit Hilfe von Wasserleitungen und Ventilen gebildet, wobei die Ventile vorzugsweise durch eine Steuerschaltung und einen Motor betätigbar sind. Mit Hilfe einer solchen Rückgewinnung ist es typischerweise möglich, beispielsweise zu Beginn eines Duschvorgangs noch nicht wunschgemäss temperiertes Wasser über eine Rücklaufleitung wieder einer Warmwasserzirkulationsleitung zuzuführen, insbesondere ohne dass das Wasser das Sanitärsystem verlässt. Dies hat zum einen den Vorteil, dass Wasser gespart wird, und zum anderen, dass die Wärmeenergie des in der Rücklaufleitung zurücklaufenden Wassers genutzt werden kann. Auf diese Weise ist es typischerweise möglich, den Wasser-und Energieverbrauch des Sanitärsystems zu senken. Dabei ist zu beachten, dass die Rückgewinnung auch auf andere (flüssige oder gasförmige) Medien anstelle von Wasser anwendbar ist.

Die Rückgewinnung umfasst ein 3/2 Weg-Ventil. Das 3/2 Weg-Ventil ist vorzugsweise eingangsseitig mit einer Mischleitung des Sanitärsystems verbunden, über die dem 3/2 Weg-Ventil temperiertes Mischwasser zugeleitet wird. Typischerweise ist das 3/2 Weg-Ventil ausgangsseitig mit einem Verbraucher, beispielsweise einer Duschbrause, einem Wasserhahn oder ähnlichem, und mit der Rücklaufleitung verbunden. Das 3/2 Weg-Ventil ist typischerweise geeignet, in Abhängigkeit der Temperatur des eingangsseitig zugeleiteten temperierten Mischwassers zuzuleiten.

Bei vorteilhaften Ausführungsformen umfasst die Rückgewinnung eine Rücklaufsammlung. Eine solche Rücklaufsammlung ist vorteilhafterweise geeignet, mehrere Rücklaufleitungen zusammenzufassen bzw. rücklaufendes Wasser aus mehreren Rücklaufleitungen zu sammeln und das so gesammelte Wasser dann bevorzugt kontrolliert der Warmwasserzirkulationsleitung zuzuführen. Eine solche Rücklaufsammlung hat den Vorteil, dass eine Gesamtleitungslänge in dem Sanitärsystem reduziert werden kann.

Besonders vorteilhaft ist es, wenn die Rückgewinnung einen Temperatursensor zur Steuerung des 3/2 Weg-Ventils umfasst. Vorteilhafterweise umfasst der Temperatursensor eine BUS-Verbindung zum Verbinden des Temperatursensors mit einem BUS des Sanitärsystems. Der Temperatursensor ist typischerweise eingangsseitig am 3/2 Weg-Ventil angeordnet. Diese Konfiguration hat den Vorteil, dass eine besonders genaue Steuerung des 3/2 Weg-Ventils ermöglicht wird, und dass eine Information des Temperatursensors über die BUS-Verbindung an unterschiedlichen Stellen des Sanitärsystems einfach und im Wesentlichen in Echtzeit abrufbar und/oder verarbeitbar ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein erfindungsgemässes Sanitärsystem;
- Fig. 2: eine erfindungsgemässe Mischzentrale;
- Fig. 3: ein Ausschnitt aus einem erfindungsgemässen Sanitärsystem mit Rückgewinnung; und
- Fig. 4: ein Ausschnitt aus einer erfindungsgemässen Rückgewinnung mit Umschaltung.

Grundsätzlich sind in den Figuren gleiche Teile mit gleichen Bezugszeichen versehen.

### Wege zur Ausführung der Erfindung

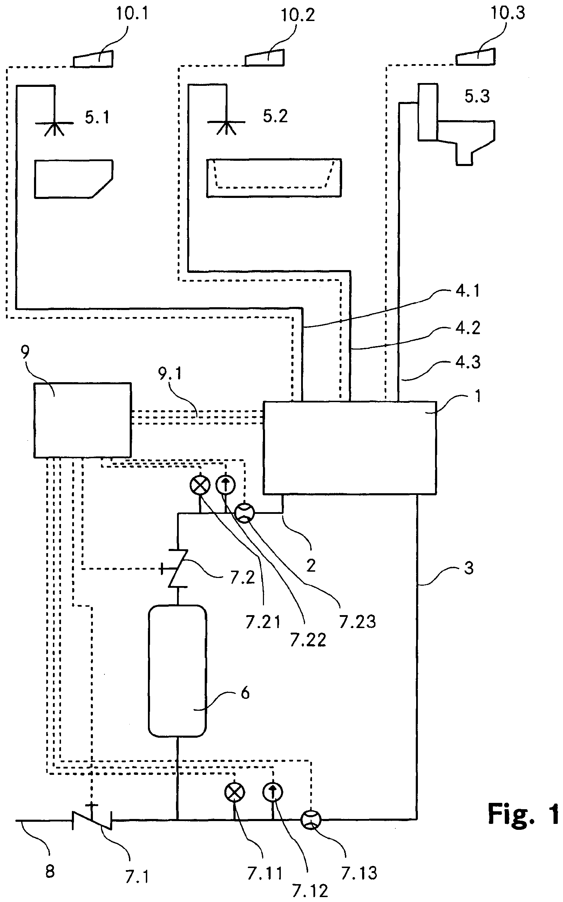

Fig. 1 zeigt schematisch ein erfindungsgemässes Sanitärsystem. Eine Mischzentrale 1 ist eingangsseitig an eine Warmwasserleitung 2 und an eine Kaltwasserleitung 3 angeschlossen. Typischerweise ist die Mischzentrale 1 einem Sanitärraum wie einem WC-Raum, einem Duschraum, einem Badezimmer, einer Küche, einem Waschmaschinenraum oder irgendeinem anderen Sanitärraum zugeordnet. Die Mischzentrale 1 kann aber auch einer Wohnung, einem Stockwerk oder irgendeinem anderen Hausbereich zugeordnet sein.

Die Mischzentrale 1 weist mehrere Mischleitungen 4.1, 4.2, 4.3 auf, deren Anzahl je nach Bedarf typischerweise zwischen drei bis acht liegt. Es können aber beliebig viele Mischleitungen 4.1, 4.2, 4.3 vorgesehen sein.

Die Mischleitungen 4.1, 4.2, 4.3 sind eingerichtet, um Wasser den dezentralen Verbrauchern 5.1, 5.2, 5.3 zuzuführen. Die dezentralen Verbraucher 5.1, 5.2, 5.3 können eine Armatur eines Waschbeckens, einer Badewanne, einer Dusche, ein WC, eine Geschirrspülmaschine, eine Waschmaschine, oder irgendeinen anderen sanitären Verbraucher betreffen. In Fig. 1 ist mit dem Bezugszeichen 5.1 ein Lavabo, mit dem Bezugszeichen 5.2 eine Badewanne und mit dem Bezugszeichen 5.3 ein WC schematisch skizziert.

Die Mischleitungen 4.1, 4.2, 4.3 führen, wie nachfolgend noch erklärt wird, Wasser gemäss gewünschten Parametern wie insbesondere einer bestimmten Temperatur, einem bestimmtem Druck, einer bestimmten Durchflussmenge oder irgendeinem anderen Parameter.

Auf der Eingangsseite der Mischvorrichtung 1 ist ein Boiler 6 zur Erzeugung von Warmwasser vorgesehen, welcher eingangsseitig an die Kaltwasserleitung 3 angeschlossen ist und ausgangseitig Wasser einer bestimmten Temperatur zur Mischvorrichtung 1 führt. Es sind Ventile 7.1, 7.2 vorgesehen, um die Zufuhr von Kaltwasser von der Versorgungsleitung 8 zum Boiler 6 sowie zur Kaltwasserleitung 3 und die Zufuhr von Warmwasser zur Warmwasserleitung 2 einzustellen.

An die Ventile 7.1, 7.2 anschliessend sind Drucksensoren 7.11, 7.12, Temperatursensoren 7.21, 7.22 und Durchflusssensoren 7.13, 7.23 angeordnet, mit welchen die Temperatur, der Druck und die Durchflussmenge gemessen werden können.

Das erfindungsgemässe sanitäre System umfasst ferner eine Steuerzentrale 9, welche beispielsweise einen Mikroprozessor mit darauf ablauffähigen Softwaremodulen umfasst. Die Steuerzentrale 9 weist Eingänge für die Signale von Sensoren auf, wie z. B. für die Drucksensoren 7.11, 7.12, die Temperatursensoren 7.21, 7.22 und die Durchflusssensoren 7.13, 7.23. Die Steuerzentrale 9 weist zudem Ausgänge für Steuersignale, wie z. B. für die Ventile 7.1,7.2.

Die Steuerzentrale 9 ist mit der Mischzentrale 1 signalmässig verbunden, beispielsweise über ein Bussystem. Am Ort der dezentralen Verbraucher 5.1, 5.2, 5.3 sind Bedieneinrichtungen 10.1, 10.2, 10.3 vorgesehen, welche signalmässig ebenfalls mit der Mischzentrale 1 verbunden sind.

Die Bedieneinrichtungen 10.1, 10.2. 10.3 weisen Eingabe- und Ausgabeeinrichtungen auf, um gewünschte Parameter wie eine Wassertemperatur, eine Wassermenge, einen Wasserdruck, eine Wassergeschwindigkeit oder irgendeinen anderen Parameter einzugeben und/oder anzuzeigen. Dazu weisen die Bedieneinrichtungen 10.1, 10.2, 10.3 beispielsweise Taster, Schalter, elektronische Displays, einen Touchscreen oder irgendwelche anderen Mittel auf. Die Bedieneinrichtungen 10.1, 10.2, 10.3 können möglichst praktisch bedienbar an einer Armatur eines Waschbeckens, an einer Badewanne, an einer Wand bei einer WC-Schüssel oder an irgendeiner anderen Stelle angebracht sein.

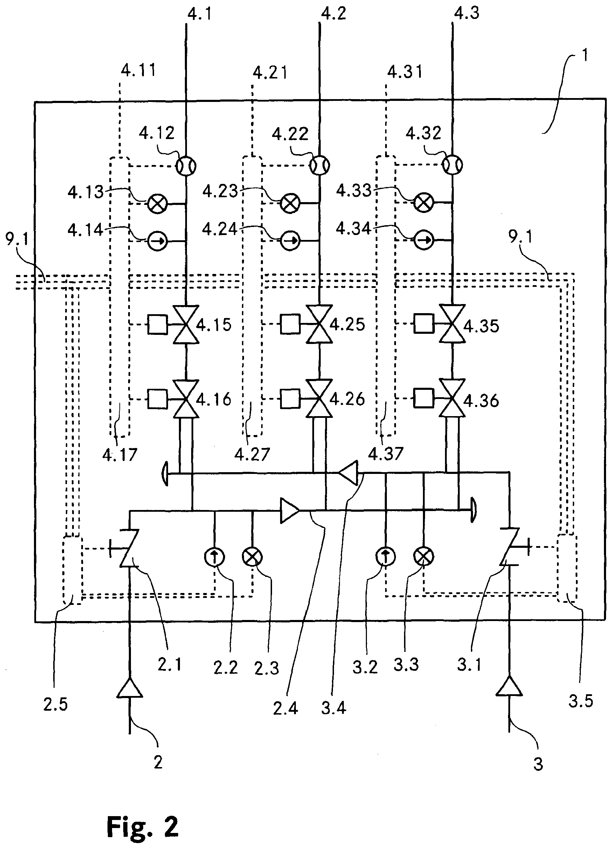

Fig. 2 zeigt schematisch eine erfindungsgemässe Mischzentrale 1. Eingangsseitig ist die Mischvorrichtung an eine Warmwasserleitung 2 und an eine Kaltwasserleitung 3 angeschlossen. Ausgangsseitig sind mehrere Mischleitungen 4.1, 4.2, 4.3 vorgesehen, welche zu den dezentralen Verbrauchern geführt werden. Wir erwähnt, können eine beliebige Anzahl Mischleitungen 4.1, 4.2, 4.3 vorgesehen sein, vorzugsweise zwischen drei bis acht.

Die Warmwasserleitung 2 ist über ein Druckreduzierventil 2.1 zum Warmwasserverteiler 2.4 geführt. Dementsprechend ist die Kaltwasserleitung 3 über ein Druckreduzierventil 3.1 zum Kaltwasserverteiler 3.4 geführt. Am Warmwasserverteiler 2 und am Kaltwasserverteiler 3 sind je Temperatursensoren 2.2, 3.2 und Drucksensoren 2.3, 3.3 angebracht, mit welchen die Temperatur und der Druck des in diesen Verteilern geführten Wassers gemessen wird.

Am Warmwasserverteiler 2.4 und am Kaltwasserverteiler 3.4 sind entsprechend der Anzahl Mischleitungen 4.1, 4.2, 4.3 die Temperaturmischer 4.16, 4.26, 4.36 angeschlossen. Die Temperaturmischer 4.16, 4.26, 4.36 mischen Warmwasser und Kaltwasser in einem einstellbaren Verhältnis, wodurch an deren Ausgang Wasser einer bestimmten Temperatur geführt ist.

Am Ausgang der Temperaturmischer 4.16, 4.26, 4.36 sind eine entsprechende Anzahl Mengenregler 4.15, 4.25, 4.35 angeschlossen, mit welchen der Volumenstrom resp. der Druck des am Ausgang der Temperaturmischer 4.16, 4.26, 4.36 abgegebenen Wasserstroms einstellbar ist. Der Ausgang der Mengenregler 4.15, 4.25, 4.35 ist zu den Mischleitungen 4.1, 4.2, 4.3 geführt, wobei dazwischen je Temperatursensoren 4.14, 4.24, 4.34, Drucksensoren 4.13, 4.23, 4.33 und Durchflusssensoren 4.12, 4.22, 4.23 angeordnet sind, mit welchen der Druck, die Temperatur und die Durchflussmenge des in diesen Leitungen geführten Wassers gemessen wird.

Jeder Mischleitung 4.1, 4.2, 4.3 ist eine Mischelektronik 4.17, 4.27, 4.37 zugeordnet. Der Warmwasserleitung 2 ist die Warmwasserelektronik 2.5 und der Kaltwasserleitung 3 die Kaltwasserelektronik 3.5 zugeordnet. Jede Mischelektronik 4.17, 4.27, 4.37 ist jeweils mit dem entsprechenden Temperaturmischer 4.16, 4.26, 4.36, Mengenregler 4.15, 4.25, 4.35, Temperatursensoren 4.14, 4.24, 4.34, Drucksensoren 4.13, 4.23, 4.33 und Durchflusssensoren 4.12, 4.22, 4.23 signalmässig verbunden. Jede Mischelektronik 4.17, 4.27, 4.37 ist zudem über elektrische Verbindungen 4.11, 4.21, 4.31 signalmässig mit den den jeweiligen Mischleitungen 4.1, 4.2, 4.3 zugeordneten Bedieneinrichtungen 10.1, 10.2, 10.3 verbunden.

Jede Mischelektronik 4.17, 4.27, 4.37 ist eingerichtet, um auf der entsprechenden Bedieneinrichtung 10.1, 10.2, 10.3 eingegebene Parameterwerte zu empfangen und/oder Messwerte an die Bedieneinrichtung 10.1, 10.2, 10.3 zu senden. Ferner ist jede Mischelektronik 4.17, 4.27, 4.37 eingerichtet, um aufgrund empfangener Parameterwerte sowie Messwerten die Einstellungen der jeweiligen Temperaturmischer 4.16, 4.26, 4.36 und Mengenregler 4.15, 4.25, 4.35 zu regeln. An den Bedieneinrichtungen 10.1, 10.2, 10.3 lassen sich somit Parameterwerte einstellen und an den Mischleitungen 4.1, 4.2, 4.3 ein entsprechender Wasserstrom zur Verfügung stellen, d. h. z. B. ein Wasserstrom einer gewünschten Temperatur, eines gewünschten Drucks, einer gewünschten Flussgeschwindigkeit, einer gewünschten Menge oder irgend eines anderen gewünschten Parameters.

Die Mischelektroniken 4.17, 4.27, 4.37, die Warmwasserelektronik 2.5 und die Kaltwasserelektronik 3.5 sind über ein Bussystem 9.1 signalmässig miteinander verbunden. Das Bussystem 9.1 ist mit der Steuerzentrale 9 signalmässig verbunden. Somit lassen sich zur Einstellung eines in einer Mischleitung 4.1, 4.2, 4.3 zur Verfügung gestellten Wasserstroms auch die Einstellungen der Druckreduzierventile 2.1, 3.1 verändern oder die Messwerte der am Warmwasserverteiler 2 und/oder am Kaltwasserverteiler 3 angebrachten Temperatursensoren 2.2, 3.2 und/oder Drucksensoren 2.3, 3.3 berücksichtigen. So können beispielsweise die Ventile 2.1, 3.1 zusätzlich geöffnet werden, um einen gleichzeitigen hohen Wasserbedarf der Mischleitungen 4.1, 4.2, 4.3 zu ermöglichen.

Bei Bedarf kann die Erfindung statt für Wasser für irgendein anderes Fluid wie z. B. für ein Öl, Benzin, ein Gas oder irgendein anderes Fluid angewendet werden.

Die Bedieneinrichtungen 10.1, 10.2, 10.3 können statt mit der Mischzentrale 1 mit der Steuerzentrale 9 signalmässig verbunden sein. Andererseits kann die Mischzentrale 1 die Steuerzentrale 9 umfassen, so dass die entsprechenden Eingänge, Ausgänge oder Signalverbindungen an der Mischvorrichtung 1 angeordnet sind.

Die Übertragung von Signalen kann auf Übertragungskabel und/oder kabelgebundenen Bussystemen basieren, welche zwischen den einzelnen Komponenten wie der Steuerzentrale 9, den Sensoren, den Bedieneinrichtungen usw. installiert sind. Selbstverständlich können stattdessen oder zusätzlich drahtlose Signalverbindungen vorgesehen sein, beispielsweise insbesondere nach einen WiFi Standard.

In sanitären Einrichtungen verursachen verschiedene Verbraucher auch verschiedene Betriebszustände, woraus sich verschiedene Szenarien für Verbraucher ergeben. Ein erfindungsgemässes System ermöglicht die gewünschten Betriebszustände und unterstützt die geforderten Szenarien unterschiedlichster Verbraucher. Der Verbraucher wird identifiziert und die entsprechenden Parameter werden zentral verwaltet.

Bei einem WC wird zur Spülung meist nur Kaltwasser verwendet. Aus diesem Grund wird keine Mischung von Kalt- und Warmwasser verlangt. Deshalb wird der Temperaturmischer auf Kaltwasser gestellt. Der Mengenregler wird geöffnet und das Wasser strömt in die WC-Schüssel. Hierbei kann der Wasserbedarf für verschiedene Situationen programmiert werden. Durch die Durchflusssensoren kann genau bestimmt werden, wie viel Wasser zur WC-Schüssel gelangen soll. Über die Möglichkeit, das Druckreduzierventil für spezielle Situationen anders einzustellen, kann der Systemdruck für eine WC-Spülung auch kurzfristig erhöht werden, ohne dass sich das Wasservofümen, welches zur Spülung gebraucht wird, verändert. Ebenfalls ist ein sofortiges Nachspülen, falls erforderlich, möglich, da kein Reservoir vorhanden ist, das zuerst wieder gefüllt werden muss. Die WC-Schüssel ist direkt mit der Mischwasserleitung verbunden. Auch eine Versorgung des WCs mit Warmwasser ist möglich, indem man den Temperaturmischer auf Warmwasser fahren lässt. Dies könnte zum Beispiel bei der Reinigung des WCs von Vorteil sein. Natürlich ist der Warmwasserbezug vom WC auch für andere Anwendungen (Dusche-WC usw.) aktivierbar.

Bei einer Dusche ist weniger die Wassermenge entscheidend sondern eher die Dauer, die jemand unter der Dusche verbringt. Deshalb wird hier mit weniger Wasserdruck gearbeitet. Hier ist es beispielsweise wichtig, dass sich niemand an zu heissem Wasser verbrüht. Es kann also vom Benutzer eine gewünschte Temperatur eingestellt und auch abgespeichert werden, welche als Komfort-Temperatur gilt. Weiter ist es möglich, eine maximale Temperatur einzustellen, um zusätzlich sicherzugehen, dass sich niemand durch zu heisses Wasser Verbrühungen zuzieht.

Bei Küchenarmaturen ist beispielsweise der Bezug einer genauen Menge an Wasser gefragt. Hierbei ist es möglich, dem System die gewünschte Wassermenge anzugeben, welche auszustossen ist. Der Durchflusssensor kontrolliert den Wasserdurchfluss und regelt die gewünschte Wassermenge nach. So ist es beispielsweise möglich, z. B. 0,75 Liter Wasser oder irgendeine andere vorgebbare Menge Wasser abzurufen, ohne dass die Verwendung eines Messbechers nötig ist. Auch können solche Wassermengen einzeln, oder zusammen als Kombination aus Wassermenge und Wassertemperatur abgespeichert werden. Ebenfalls ist es möglich, eine Pfanne zu füllen, indem man die Armatur resp. die Auszugsbrause über eine Pfanne hält und ein Näherungssensor dann den Befehl zum Abschalten an das System weitergibt, sobald sich der Wasserstand bis an den gewünschten Abstand zum Sensor genähert hat.

Bei einer Armatur für eine Badewanne sind beispielsweise die Mengenvorwahl und die Temperatur von hoher Wichtigkeit. Somit ist es möglich, verschiedene Füllmengen für einzelne Personen und deren Komforttemperatur abzuspeichern und wieder abzurufen. Um ein schnelles Füllen der Badewanne zu gewährleisten, kann auch hier das Druckreduzierventil automatisch und vorübergehend auf einen höheren Druck eingestellt werden.

Bei einer Spülmaschine gibt es im Allgemeinen nur einen Anschluss, der meist für Kaltwasser verwendet wird, jedoch oft auch für Warmwasser geeignet wäre. Da es von der Maschine abhängig ist, ob ein Anschliessen an die Warmwasserleitung erlaubt ist oder nicht, ist ein Austausch auf einen anderen Maschinentyp oft mit einer Anpassung der sanitären Installation (Ziehen von zusätzlichen Leitungen) verbunden. Aus diesem Grund werden oftmals auch neue Spülmaschinen nur an den Kaltwasser Anschluss angeschlossen, was energietechnisch nicht sinnvoll ist. Durch das Konzept der Mischwasserleitung können an unserem System beide Maschinentypen angeschlossen werden. Somit ist es möglich, nur Kalt-, Warm- oder Mischwasser zu beziehen. Auch besteht die Möglichkeit, über eine offene Kommunikationsschnittstelle von den Spülmaschinen direkte Anweisungen (Wassermenge und Temperatur) an das erfindungsgemässe System weiterzugeben und so die Wassermenge und die Wassertemperatur, spezifisch und optimiert für den momentanen Spülgang, zu beziehen.

Mit den Durchflusssensoren lässt sich der Wasserverbrauch individuell überwachen. Die Steuerzentrale kann beispielsweise eingerichtet sind, um bei Bedieneinrichtungen auf einen hohen Wasserverbrauch hinzuweisen und Lösungsvorschläge für eine Reduktion des Wasserverbrauchs anzuzeigen. Auch lässt sich der Wasserverbrauch für die Zwecke einer Abrechnung leicht festhalten.

Das erfindungsgemässe System identifiziert die einzelnen Verbraucher und ermöglicht es, den Druck für die einzelnen Verbraucher vorzudefinieren und damit Möglichkeiten für das Wassersparen zu schaffen. Ein weiterer Vorteil ist es, dass bei mehreren aktiven Verbrauchern welche zu einem reduzierten Druck führen, durch das weitere Öffnen der Druckreduzierventile den Druck zu erhöhen. Falls also von mehreren Verbrauchern Wasser verlangt wird, so kann mehr Druck zur Verfügung gestellt werden, ohne dass dabei ein Nachlassen der Literleistung oder des Temperaturniveaus spürbar ist.

Durch die eindeutige Identifikation der Verbraucher kann der Druck für die einzelnen Anwendungen eingestellt werden. Wenn z. B. eine Badewanne aktiviert wird, kann über die Druckreduzierventile die gesamte Leistung weitergeben werden, damit die Badewanne in möglichst kurzer Zeit gefüllt werden kann. Wenn jedoch ein anderer Verbraucher wie z. B. eine Dusche oder Armatur eines Waschbeckens aktiviert ist, regeln die Druckreduzierventile den Druck herunter, damit nicht unnötig viel Wasser verbraucht wird.

Durch den Drucksensor in der Mischwasserleitung kann der Fliessdruck bei der Wasserentnahme gemessen werden. Diese Werte werden protokolliert und ausgewertet. Durch diese Auswertung (Druckanstieg) ist es möglich, Verengungen der Leitung z. B. durch Kalk frühzeitig zu erkennen, bevor Schaden entstehen kann.

Es ist z. B. möglich, dass sich Verbraucher von alleine abstellen, falls das Wasser über eine längere Zeit laufen gelassen wird. Somit wird nicht unnötig Wasser verbraucht, falls jemand vergessen hat, dies abzustellen. Zudem ist es auch möglich alle, oder ausgewählte, Verbraucher auf einmal zu deaktivieren, z. B. wenn man das Haus verlässt.

Durch die Drucksensoren kann bestimmt werden, ob das System ein Leck hat. Falls diese Sensoren einen Druckabfall registrieren obwohl kein Verbraucher aktiviert ist, dann kann daraus geschlossen werden, dass ein Leck besteht. Die Druckreduzierventile werden geschlossen und somit das System von der Hauptwasserleitung getrennt. Damit wird eine Notabschaltung gemacht und der Schaden durch ein Leck auf ein Minimum reduziert.

Durch die Drucksensoren beim Warmwasserverteiler und Kaltwasserverteiler kann der Druck in der Hausinstallation überwacht werden. Sollte dieser Druck nun abfallen und gleichzeitig kein Verbraucher aktiv sein, so wird ein Leck vermutet. In diesem Fall wird direkt bei der zentralen Versorgungsleitung vom Gebäude das Schutzventil geschlossen, so dass kein Wasser aus der Versorgungsleitung nachfliessen kann. Um den Schaden weiter zu reduzieren, werden alle dazu nützlichen Verbraucher kontrolliert aktiviert und das Wasser so in die Lavabos, Badewannen usw. abgelassen. Durch diesen gewollten Druckabbau im System wird die ausfliessende Wassermenge an der Leckstelle stark reduziert.

Das System kann automatisch die Verbraucher aktivieren, falls sie z. B. über eine längere Zeit nicht aktiv waren. Es kann vorkommen, dass nach längerer Abwesenheit wegen z. B. Ferien die Wasserbarriere im Siphon verdunstet. Somit kann der Geruch aus den Abwasserleitungen in die Räume eindringen. Um das zu unterbinden, kann das System gezielt eingreifen und eine kleine Menge Wasser ausstossen, um diese Wasserbarriere ständig aufrecht zu erhalten. Ebenfalls kann eine Zunahme von Legionellen dadurch unterbunden werden, dass sich das System von Zeit zu Zeit selbst durchspült und somit ein Ansteigen der Legionellenanzahl verhindert.

Durch das kontrollierte Zufahren der Mengenregler entstehen keine Druckschläge. Das System schliesst vergleichsweise langsam und ein abruptes Stoppen des Mediums ist nicht möglich. Ebenfalls wirken sich von aussen verursachte Druckschläge nicht negativ auf das erfindungsgemässe System aus, da das Schutzventil ein Ansteigen des Drucks erkennt und das System mechanisch von der Installation trennt, bis sich die Druckzustände normalisiert haben.

Durch die Erfindung ergeben sich Vorteile für verschiedene Verbraucher, insbesondere durch die optimierten Mischverhältnisse zwischen Kalt- und Warmwasser, durch das Erreichen einer hohen Temperaturgenauigkeit und Durchflussmengengenauigkeit und den sparsamen Umgang mit der Ressource Wasser.

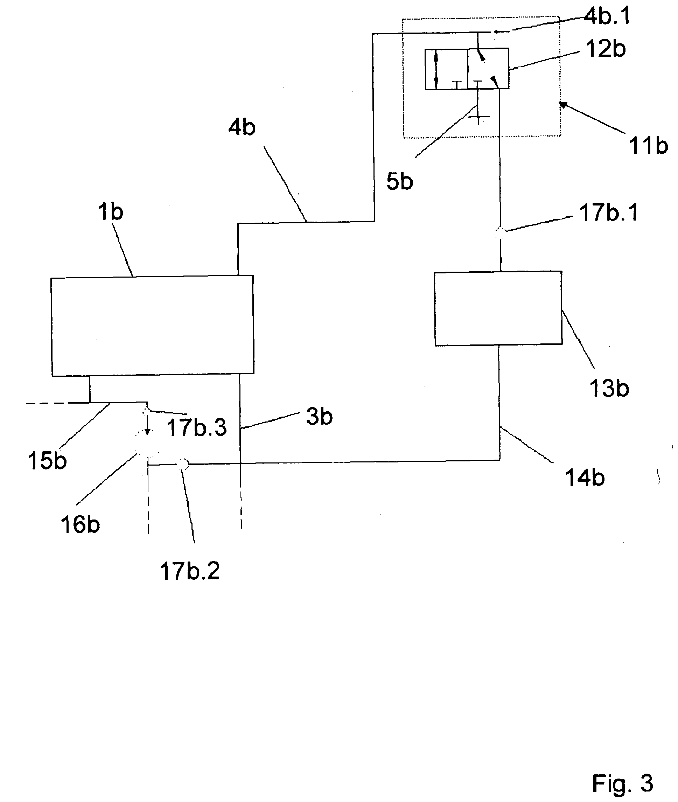

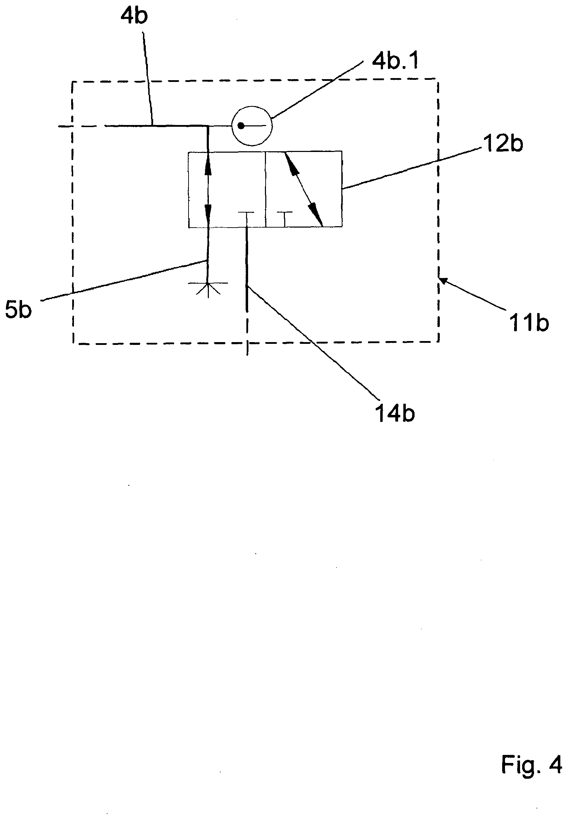

Figuren 3 und 4 zeigen Ausschnitte eines weiteren Ausführungsbeispiels eines erfindungsgemässen Sanitärsystems, welches eine Rückgewinnung zur Senkung des Wasserverbrauchs und zur Erhöhung der Energieeffizienz des Sanitärsystems umfasst. Dabei ist zu erwähnen, dass die Rückgewinnung an sich unabhängig von der Erfindung gemäss Anspruch 1 eingesetzt werden kann.

In Figur 3 ist eine Mischzentrale 1 b dieses weiteren Ausführungsbeispiels eines erfindungsgemässen Sanitärsystems gezeigt. Diese Mischzentrale 1 b ist über eine Kaltwasserleitung 3b und eine Warmwasserzirkulationsleitung 15b mit dem (nicht näher gezeigten) Rest des Sanitärsystems verbunden. Über die Kaltwasserleitung 3b wird der Mischzentrale 1 b Kaltwasser zugeführt. Über die Warmwasserzirkulationsleitung 15b wird der Mischzentrale Warmwasser zugeführt. Von der Mischzentrale 1 b führt eine Mischleitung 4b zu einer Umschaltung 11 b, in welcher ein dezentraler Verbraucher 5b (hier eine Dusche), ein 3/2 Weg-Ventil 12b und ein Temperatursensor 4b.1 angeordnet sind.

Von der Umschaltung 11b führt eine Rücklaufleitung 14b zunächst zu einer Rücklaufsammlung 13b und anschliessend zu einer Zusammenflussstelle mit der Warmwasserzirkulationsleitung 15b. In der Warmwasserzirkulationsleitung 15b ist eine Zirkulationspumpe 16b angeordnet, welche das Warmwasser in der Warmwasserzirkulationsleitung 15b zirkulieren lässt. Figur 3 zeigt zudem drei Rückflussverhinderer 17b.1, 17b.2 und 17b.3. Diese Rückflussverhinderer 17b.1, 17b.2 und 17b.3 verhindern ein Rückfliessen von Wasser aus der Rücklaufsammlung 13b in Richtung der Umschaltung 11 b, bzw. ein Rückfliessen von Wasser aus der Warmwasserzirkulationsleitung 15b in die Rücklaufleitung 14b, bzw. ein Rückfliessen von Wasser von einem Ausgang der Zirkulationspumpe 16b durch einen Eingang der Zirkulationspumpe 16b. Die Rückflussverhinderer können an sich bekannte Einweg- bzw. Rückschlagventile sein. Alternativ zu der in Fig. 3 gezeigten Lösung kann der Rückflussverhinderer 17b.3 auch in der Zirkulationspumpe 16b integriert sein.

Die Funktion der Rückgewinnung ist wie folgt: möchte ein Benutzer den dezentralen Verbraucher 5b benutzen um zu duschen, so kann er zunächst eine gewünschte Duschwassertemperatur vorwählen und anschliessend den Duschvorgang starten. Der Temperatursensor 4b.1 kann dabei ab Beginn des Duschvorgangs die Temperatur des Mischwassers, welches die Umschaltung 11 b über die Mischleitung 4b erreicht, ermitteln und ggf. über ein in Figur 3 nicht gezeigtes BUS-System an unterschiedliche Komponenten des Sanitärsystems, z.B. an die Mischzentrale 1b, übermitteln. Solange die Temperatur des Wassers aus der Mischleitung 4b noch nicht der gewünschten Duschwassertemperatur entspricht, leitet das 3/2 Weg-Ventil das Wasser aus der Mischleitung 4b nicht zum dezentralen Verbraucher 5b (hier die Dusche), sondern direkt in die Rücklaufleitung 14b. Die Rücklaufleitung 14b leitet dieses noch nicht richtig temperierte Rücklaufwasser der Warmwasserzirkulationsleitung 15b zu.

In die Warmwasserzirkulationsleitung 15b ist ein in Figur 3 nicht gezeigter Boiler integriert. Dieser Boiler wird nicht lediglich mit Kaltwasser, sondern vielmehr mit einer Mischung aus Kaltwasser und dem (Rücklauf-)Wasser der Warmwasserzirkulationsleitung 15b gespiesen. Somit benötigt das Sanitärsystem zum einen weniger Wasser als ein Sanitärsystem ohne Rückgewinnung und zum anderen auch vergleichsweise wenig Energie, da das Wasser, welches dem Boiler zugeführt wird, eine Mischung aus Kaltwasser und Rücklauf- bzw. Zirkulationswasser ist, welches eine höhere Temperatur als einfaches Kaltwasser hat. Um am Eingang des Boilers ein Rückfliessen von Wasser aus der Warmwasserzirkulationsleitung 15b in die Kaltwasserleitung 3b zu verhindern, kann zwischen der Warmwasserzirkulationsleitung 15b und der Kaltwasserleitung 3b ein weiterer Rückflussverhinderer angeordnet sein (in Figur 3 nicht gezeigt).

Die Umschaltung 11 b ist in Figur 3 in ihrer Rücklaufstellung gezeigt. Diese Stellung ist dann aktiv, wenn von einem Benutzer Duschwasser in der gewünschten Duschwassertemperatur angefordert wird, diese aber am dezentralen Verbraucher 5b noch nicht verfügbar ist. In diesem Fall wird das noch nicht richtig temperierte Mischwasser über die Rücklaufleitung 14b wieder in die Warmwasserzirkulationsleitung 15b eingespeist, welche zurück zum Boiler führt.

In Figur 4 ist die Umschaltung 11 b in ihrer Verbrauchsstellung gezeigt. Diese Stellung ist dann aktiv, wenn Duschwasser in der gewünschten Duschwassertemperatur verfügbar ist. In diesem Fall wird das richtig temperierte Mischwasser von der Mischleitung 4b direkt zum dezentralen Verbraucher 5b - hier also zur Duscharmatur - geleitet.

## Patentansprüche

1. Sanitärsystem mit
a) einer Mischzentrale (1), welche eingangsseitig an eine Warmwasserleitung (2) sowie eine Kaltwasserleitung (3) und ausgangsseitig an mehrere zu Verbrauchern (5.1, 5.2, 5.3) geführte Mischleitungen (4.1,4.2,4.3) angeschlossen ist, und wobei
b) die Mischzentrale (1) mehrere steuerbare Mischeinheiten (4.16, 4.15, 4.26, 4.25, 4.36, 4.35) aufweist zur steuerbaren Zuführung von Wasser aus der Kaltwasserleitung (3) und/oder der Warmwasserleitung (2) in die Mischleitungen (4.1, 4.2, 4.3),
c) je Verbraucher (5.1, 5.2, 5.3) einer Bedieneinrichtung (10.1,10.2,10.3) zur Eingabe eines Parameterwerts wie insbesondere der Temperatur, des Drucks, der Durchflussgeschwindigkeit und/oder der Durchflussmenge, und
d) einer Steuerzentrale (9), die aufgrund des jeweiligen Parameterwerts die steuerbare Mischeinheit (4.16, 4.26, 4.36, 4.15, 4.25, 4.35) steuert,
**dadurch gekennzeichnet, dass**
e) die Verbraucher jeweils einen elektronischen Speicher zur Abspeicherung der Verbraucheridentifikation sowie ein Kommunikationsmodul aufweisen, welches jeweils mit einem entsprechenden Kommunikationsmodul der Steuerzentrale verbunden ist und über welches die Übertragung einer den Verbraucher betreffenden Verbraucheridentifikation an die Steuerzentrale erfolgt,
f) welche die Steuerzentrale (9) zur Steuerung der steuerbaren Mischeinheit (4.16, 4.15, 4.26, 4.25, 4.36, 4.35) berücksichtigt und
g) wobei die Steuerzentrale hierzu einen Datenspeicher aufweist, in dem eine Liste von möglichen bzw. zulässigen Verbrauchern abgespeichert ist, und eine Tabelle zur Zuordnung von Verbraucheridentifikationen zu zulässigen Betriebswerten des jeweiligen Verbrauchers.

2. Sanitärsystem gemäss Anspruch 1. wobeidasKommunikationsmodul des Verbrauchers und das entsprechende Kommunikationsmodul der Steuerzentrale ein serielles Interface umfassen.

3. Sanitärsystem nach Anspruch 1 oder 2. **dadurch gekennzeichnet, dass** Sensoren (4.12, 4.22, 4.32, 4.13, 4.23, 4.33, 4.14, 4.24, 4.34, 7.11, 7.12, 7.21, 7.22, 7.13, 7.23) vorgesehen sind zur Bestimmung von Messwerten wie insbesondere der Temperatur, des Drucks und/oder der Durchflussmenge, welche die Steuerzentrale (9) zur Steuerung und/oder Regelung der steuerbaren Mischeinheit (4.16, 4.15, 4.26, 4.25, 4-36, 4.35) berücksichtigt.

4. Sanitärsystem nach einem der Ansprüche 1-3, **dadurch gekennzeichnet, dass** einer der Verbraucher (5.1, 5.2, 5.3) eine aufsteckbare Armatur mit einer an die Steuerzentrale (9) übertragbaren Verbraucheridentifikation aufweist.

5. Sanitärsystem nach einem der Ansprüche 1 bis 4, **dadurch gekennzeichnet, dass** eine Verbraucheridentifikation mit derBedieneinrichtung (10.1, 10.2, 10.3) generierbarund an die Steuerzentrale (9) übertragbar ist.

6. Sanitärsystem nach einem der Ansprüche 1 bis 5. **dadurch gekennzeichnet, dass** zur Signal- und/oder Energieübertragung kabelbasierte, bussystembasierte und/oder funkbasierte Verbindungen vorgesehen sind.

7. Sanitärsystem nach einem der Ansprüche 1 bis 6, **dadurch gekennzeichnet, dass** die Steuerzentrale (9) aufgrund einer Auswertung einer Verbraucheridentifikation einen Maximal- und/oder Minimalwert berücksichtigt, beispielsweise eine maximale Wassertemperatur. eine maximale Wassermenge und/oder einen minimalen Wasserdruck.

8. Sanitacsystem nach einem der Ansprüche 1 bis 7, **dadurch gekennzeichnet dass** die Mischzentrale (f) zwischen drei und acht Mischeinheiten. (4.16, 4.26, 4.36, 4.15, 4.25, 4.35) aufweist. walcha in modularer Bauveise anordenbar sind.

9. Sanitarsystem nach einem der Ansproche 1 bis 8, **dadurch gekennzeichnet dass** die Mischeinheiten (4.16, 4.26, 4-36, 4.15, 4.25, 4.35) einen Temperaturmischer (4.16, 4.26, 4.36) zur Erstallung eines Mischverhaltnisses von Warm- und Kaliwasser sowie einen daran angeschlossenen Mengenregler (4.15, 4.25, 4.35) aufweisen,

10. Sanitärsystem nach einem der Ansprüche 1 bis 9, **dadurch gekennzeichnet dass** anschliessend an eine Mischeinheit ein Temperatursensor (4.14, 4-24, 4.34), ein Drucksansor (4.13, 423, 4.33) und/oder ein Durchflussensor 4.12, 4.22. 4.32) vorgesehen ist.

11. Sanitarsystem nach einem der Ansprüche 1 bis 10. **dadurch gekennzeichnet dass** ein Druckreduzierventil (2.1) für die Warmwasserleitung und/oder ein Duckreduzierventil (3.1) für die Kaltwasserleitung vorgesehen ist

12. Sanitarsystem nach einem der Ansprüche 1 bis 11. **dadurch gekennzeichnet, dass** für die Warmwasserleitung (2) und/oder for die Kaltwasserleitung (3) ein Temperatursensor (2.2. 3.2). ein Drucksensor (2.3. 3.3) und/oder ein Durchflusssensor vorgesehenist.

13. Sanitarsystem nach einem der Ansprüche 1 - 12, **gekennzeichnet durch** eine Rückgewinrung zum Rockgawinnen von Wasser und/oder Warmeenergie, wobei die Rockgawinnung ein 3/2 Weg-Ventil (12b) umfasst.

14. Sanitarsystem nach Anspruch 13. **dadurch gekennzeichnet, dass** die Rockgewinnung eine Rocklaufsammiung (13b) umfasst.

15. Sanitarsystem nach eine m der Ansprüche 13 bis 14, **dadurch gekennzeichnet, dass** die Rockgewinnung einen Temperatursensor (4b.1) zur Steuerung des 3/2 Weg-Ventils (12b) umfasst.

## Claims

1. Sanitary system comprising
a) a central mixing station (1) which is connected, at the input end, to a hot water line (2) and to a cold water line (3) and, at the output end, to a plurality of mixing lines (4.1, 4.2, 4.3) which are routed to consumers (5.1, 5.2, 5.3), and wherein
b) the central mixing station (1) has a plurality of controllable mixing units (4.16, 4.15, 4.26, 4.25, 4.36, 4.35) for controllably supplying water from the cold water line (3) and/or the hot water line (2) to the mixing lines (4.1, 4.2, 4.3),
c) an operating device (10.1, 10.2, 10.3) per each consumer (5.1, 5.2, 5.3) for inputting a parameter value, such as in particular the temperature, the pressure, the throughflow rate and/or the throughflow quantity, and
d) a central control station (9) which controls the controllable mixing unit (4.16, 4.26, 4.36, 4.15, 4.25, 4.35) on the basis of the respective parameter value,
**characterized in that**
e) the consumers each have an electronic memory for storing the consumer identification as well as a communications module which is respectively connected to a corresponding communications module of the central control station, and by means of which a consumer identification which relates to the consumer is transmitted to the central control station,
f) which the central control station (9) takes into consideration in order to control the controllable mixing unit (4.16, 4.15, 4.26, 4.25, 4.36, 4.35), and
g) wherein the central control system has, for this purpose, a data memory in which a list of possible respectively permissible consumers is saved and a table for assigning consumer identifications to permissible operating values of the respective consumer.

2. Sanitary system according to Claim 1, wherein the communications module of the consumer and the corresponding communications module of the central control station comprise a serial interface.

3. Sanitary system according to Claim 1 or 2, **characterized in that** sensors (4.12, 4.22, 4.32, 4.13, 4.23, 4.33, 4.14, 4.24, 4.34, 7.11, 7.12, 7.21, 7.22, 7.13, 7.23) are provided for determining measurement values, such as in particular the temperature, the pressure and/or the throughflow quantity, which measurement values the central control station (9) takes into consideration in order to control and/or regulate the controllable mixing unit (4.16, 4.15, 4.26, 4.25, 4.36, 4.35).

4. Sanitary system according to one of Claims 1-3, **characterized in that** one of the consumers (5.1, 5.2, 5.3) has a mountable fitting with a consumer identification which can be transmitted to the central control station (9).

5. Sanitary system according to one of Claims 1 to 4, **characterized in that** a consumer identification can be generated by the operating device (10.1, 10.2, 10.3) and can be transmitted to the central control station (9).

6. Sanitary system according to one of Claims 1 to 5, **characterized in that** cable-based, bus system-based and/or radio-based connections are provided for signal and/or energy transmission.

7. Sanitary system according to one of Claims 1 to 6, **characterized in that** the central control station (9) takes into consideration a maximum and/or minimum value, for example a maximum water temperature, a maximum water quantity and/or a minimum water pressure, on the basis of an evaluation of a consumer identification.

8. Sanitary system according to one of Claims 1 to 7, **characterized in that** the central mixing station (1) has between three and eight mixing units (4.16, 4.26, 4.36, 4.15, 4.25, 4.35) which can be arranged in a modular manner.

9. Sanitary system according to one of Claims 1 to 8, **characterized in that** the mixing units (4.16, 4.26, 4.36, 4.15, 4.25, 4.35) have a temperature mixer (4.16, 4.26, 4.36) for creating a mixing ratio of hot and cold water and also have a quantity regulator (4.15, 4.25, 4.35) which is connected to the said temperature mixer.

10. Sanitary system according to one of Claims 1 to 9, **characterized in that** a temperature sensor (4.14, 4.24, 4.34), a pressure sensor (4.13, 4.23, 4.33) and/or a throughflow sensor (4.12, 4.22, 4.32) are/is provided following a mixing unit.

11. Sanitary system according to one of Claims 1 to 10, **characterized in that** a pressure-reducing valve (2.1) for the hot water line and/or a pressure-reducing valve (3.1) for the cold water line are/is provided.

12. Sanitary system according to one of Claims 1 to 11, **characterized in that** a temperature sensor (2.2, 3.2), a pressure sensor (2.3, 3.3) and/or a throughflow sensor are/is provided for the hot water line (2) and/or for the cold water line (3).

13. Sanitary system according to one of Claims 1-12, **characterized by** a recovery means for recovering water and/or thermal energy, wherein the recovery means comprises a 3/2-way valve (12b).

14. Sanitary system according to Claim 13, **characterized in that** the recovery means comprises a return collection means (13b).

15. Sanitary system according to one of Claims 13 and 14, **characterized in that** the recovery means comprises a temperature sensor (4b.1) for controlling the 3/2-way valve (12b).

## Revendications

1. Système sanitaire comportant
a) une centrale de mélange (1), qui est raccordée à l'entrée à une conduite d'eau chaude (2) ainsi qu'à une conduite d'eau froide (3) et à la sortie à plusieurs conduites de mélange (4.1, 4.2, 4.3) menées à des consommateurs (5.1, 5.2, 5.3), et
b) dans lequel la centrale de mélange (1) présente plusieurs unités de mélange réglables (4.16, 4.15, 4.26, 4.25, 4.36, 4.35) pour la fourniture réglable d'eau à partir de la conduite d'eau froide (3) et/ou de la conduite d'eau chaude (2) aux conduites de mélange (4.1, 4.2, 4.3),
c) par consommateur (5.1, 5.2, 5.3) un dispositif de commande (10.1, 10.2, 10.3) permettant d'entrer une valeur de paramètre comme en particulier la température, la pression, la vitesse d'écoulement et/ou le débit, et
d) une centrale de commande (9), qui commande l'unité de mélange réglable (4.16, 4.26, 4.36, 4.15, 4.25, 4.35) sur la base de la valeur de paramètre respective,
**caractérisé en ce que**
e) les consommateurs présentent respectivement une mémoire électronique pour stocker l'identification du consommateur, ainsi qu' un module de communication, qui est relié respectivement à un module de communication correspondant de la centrale de commande et qui assure la transmission à la centrale de commande d'une identification de consommateur concernant le consommateur,
f) dont la centrale de commande (9) tient compte pour la commande de l'unité de mélange réglable (4.16, 4.15, 4.26, 4.25, 4.36, 4.35) et
g) dans lequel la centrale de commande présente à cet effet une mémoire de données dans lequel est stockée une liste de consommateurs possibles ou autorisés et un tableau permettant d'associer des identifications de consommateur à des valeurs de fonctionnement admissibles du consommateur respectif.

2. Système sanitaire selon la revendication 1, dans lequel le module de communication du consommateur et le module de communication correspondant de la centrale de commande comprennent une interface série.

3. Système sanitaire selon la revendication 1 ou 2, **caractérisé en ce qu'**il est prévu des capteurs (4.12, 4.22, 4.32, 4.13, 4.23, 4.33, 4.14, 4.24, 4.34, 7.11, 7.12, 7.21, 7.22, 7.13, 7.23) pour la détermination de valeurs de mesure comme en particulier de la température, de la pression et/ou du débit, dont la centrale de commande (9) tient compte pour la commande et/ou la régulation de l'unité de mélange réglable (4.16, 4.15, 4.26, 4.25, 4.36, 4.35).

4. Système sanitaire selon l'une quelconque des revendications 1 à 3, **caractérisé en ce qu'**un des consommateurs (5.1, 5.2, 5.3) présente une robinetterie emboîtable avec une identification de consommateur transmissible à la centrale de commande (9).

5. Système sanitaire selon l'une quelconque des revendications 1 à 4, **caractérisé en ce qu'**une identification de consommateur peut être générée avec le dispositif de commande (10.1, 10.2, 10.3) et transmise à la centrale de commande (9).

6. Système sanitaire selon l'une quelconque des revendications 1 à 5, **caractérisé en ce qu'**il est prévu des liaisons à base de câbles, à base de système de bus et/ou à base de radio pour la transmission de signaux et/ou d'énergie.

7. Système sanitaire selon l'une quelconque des revendications 1 à 6, **caractérisé en ce que** la centrale de commande (9) tient compte, sur la base d'une évaluation d'une identification de consommateur, d'une valeur maximale et/ou minimale, par exemple une température maximale de l'eau, un débit d'eau maximal et/ou une pression minimale de l'eau.

8. Système sanitaire selon l'une quelconque des revendications 1 à 7, **caractérisé en ce que** la centrale de mélange (1) présente entre trois et huit unités de mélange (4.16, 4.26, 4.36, 4.15, 4.25, 4.35), qui peuvent être disposées en une structure modulaire.

9. Système sanitaire selon l'une quelconque des revendications 1 à 8, **caractérisé en ce que** les unités de mélange (4.16, 4.26, 4.36, 4.15, 4.25, 4.35) présentent un mitigeur (4.16, 4.26, 4.36) pour l'établissement d'un rapport de mélange d'eau chaude et d'eau froide ainsi qu'un régulateur de débit (4.15, 4.25, 4.35) raccordé à celui-ci.

10. Système sanitaire selon l'une quelconque des revendications 1 à 9, **caractérisé en ce qu'**il est prévu à la suite d'une unité de mélange un capteur de température (4.14, 4.24, 4.34), un capteur de pression (4.13, 4.23, 4.33) et/ou un capteur de débit (4.12, 4.22, 4.32).

11. Système sanitaire selon l'une quelconque des revendications 1 à 10, **caractérisé en ce qu'**il est prévu une soupape de réduction de pression (2.1) pour la conduite d'eau chaude et/ou une soupape de réduction de pression (3.1) pour la conduite d'eau froide.

12. Système sanitaire selon l'une quelconque des revendications 1 à 11, **caractérisé en ce qu'**il est prévu pour la conduite d'eau chaude (2) et/ou pour la conduite d'eau froide (3) un capteur de température (2.2, 3.2), un capteur de pression (2.3, 3.3) et/ou un capteur de débit.

13. Système sanitaire selon l'une quelconque des revendications 1 à 12, **caractérisé par** un circuit de récupération en vue de récupérer de l'eau et/ou de l'énergie thermique, dans lequel le circuit de récupération comprend une vanne à 3/2 voies (12b).

14. Système sanitaire selon la revendication 13, **caractérisé en ce que** le circuit de récupération comprend un collecteur de retour (13b).

15. Système sanitaire selon une des revendications 13 à 14, **caractérisé en ce que** le circuit de récupération comprend un capteur de température (4b.1) pour la commande de la vanne à 3/2 voies (12b).
